# EUROPEAN PATENT SPECIFICATION

(11) **EP 3 141 356 B1**
(45) Date of publication and mention of the grant of the patent: **25.04.2018**
(21) Application number: 16001991.5
(22) Date of filing: 13.09.2016
(51) Int. Cl.: B26B 15/00

(54) **ELECTRIC SCISSORS**
ELEKTRISCHE SCHERE
CISEAUX ÉLECTRIQUES

(30) Priority: 14.09.2015 JP 2015181254
(43) Date of publication of application: 15.03.2017
(73) Proprietor: MAX CO., LTD., Chuo-ku, Tokyo 103-8502 (JP)
(72) Inventor: Ishiguro, Hiroki, Tokyo, 103-8502 (JP); Ueno, Satoshi, Tokyo, 103-8502 (JP)
(74) Representative: Samson & Partner Patentanwälte mbB

(56) References cited:
- EP-A1- 2 159 529
- EP-A1- 2 746 002
- US-A- 1 996 813
- US-A1- 2015 121 706

## Description

### TECHNICAL FIELD

The present invention relates to electric scissors that are used by electrically opening and closing blade sections.

### BACKGROUND

These types of electric scissors, as described for example in EP 2 159 529 A, are used in pruning of trees or the like to be able to cut cutting object such as branches by opening and closing a pair of blade sections by a driving force of a motor. Recently, in these types of electric scissors, electric scissors configured to be able to cope with various usage environments and needs by performing auxiliary operations other than the cutting operation have been known.

As the auxiliary operation, for example, an operation of adjusting an opening angle of the blade to suit the thickness of the branch is known. By providing a function of adjusting the opening angle of the blade, it is possible to perform cutting at a time by setting a large opening angle of the blade when cutting the thick branches, and it is possible to quickly and efficiently perform cutting by setting a smaller opening angle of the blade when cutting the thin branches.

In order to perform such an auxiliary operation, it is necessary to provide a manipulating way of performing the auxiliary operation. As a manipulating way of performing the auxiliary operation, two ways are mainly considered. One of them is to perform the auxiliary operation by utilizing an existing manipulating section. The other is to perform the auxiliary operation by providing a separate manipulating section different from the existing manipulating section, and by utilizing the separate manipulating section.

As the former, for example, there is considered a way of using a switch for releasing the safety lock and a manipulating member for performing the cutting operation to perform the auxiliary operation when manipulating these two manipulating sections through a predetermined procedure. Specifically, there is considered a way of performing the auxiliary operation by successively pressing the switch three times, and performing the manipulation for pressing for a long time and holding the manipulating member, while pressing the switch for the third time. According to such a configuration, it is possible to perform the auxiliary operation using the existing switch or the like.

As the latter, for example, JP-B-5497039 discloses a configuration in which a sub-trigger for performing the auxiliary operation is provided. The sub-trigger is pivotally connected to a main trigger for performing the cutting operation and is disposed to form an angle with the main trigger. By providing such a dedicated manipulating section for performing the auxiliary operation, it is possible to perform the auxiliary operation without complicated manipulations.

### SUMMARY

However, the former configuration according to the related art described above, i.e., a configuration that performs the auxiliary operation using the existing manipulating section has a problem that the manipulation is complicated and hard to understand, and it takes time for the manipulation.

Since the latter configuration of the conventional configurations is, i.e., the configuration described in JP-B-5497039 pivotally connects the main trigger and the sub-trigger, there are problems of inevitable complication of the structure of the manipulating section and an increase in the number of components. Further, since it is also necessary for sensors for sub-trigger, there is a problem that manufacturing cost increases.

Accordingly, an object of the invention is to provide electric scissors that are capable of performing the auxiliary operation with simple operation, and hardly affect the conventional structure and the number of the components.

The invention has been made to solve the above problems and has the following characteristics.
(1) Electric scissors includes a pair of blade sections and a manipulating member. The pair of blade sections is capable of being opened and closed. The manipulating member has a first manipulating section and a second manipulating section which are provided to face each other. The first manipulating section performs opening and closing operation of the blade sections. The second manipulating section performs an auxiliary operation which is different from the opening and closing operation. When the first manipulating section is manipulated in a predetermined direction, the opening and closing operation is performed. When the second manipulating section is manipulated in a direction different from the predetermined direction, the auxiliary operation is performed.
(2) In the electric scissors according to (1), the second manipulating section is provided so as not to relatively move with respect to the first manipulating section.
(3) The electric scissors according to (1) or (2), further includes a grip. The grip is provided on an opposite side of the blade section with respect to the manipulating member such that the manipulating member is interposed between the grip and the blade section. When the first manipulating section is pulled to come close to the grip, the opening and closing operation is performed. When the second manipulating section is pushed away from the grip, the auxiliary operation is performed.
(4) In the electric scissors according to (3), the manipulating member rotates to come close to the grip when the first manipulating section is pulled. The manipulating member rotates away from the grip when the second manipulating section is pressed.
(5) In the electric scissors according to (3), the manipulating member linearly moves to come close to the grip when the first manipulating section is pulled. The manipulating member linearly moves away from the grip when the second manipulating section is pressed.
(6) The electric scissors according to any one of (1) to (5), further includes a sensor. The sensor detects manipulation of the first manipulating section in the predetermined direction from an initial position, and detects manipulation of the second manipulating section in the direction different from the predetermined direction from the initial position. The electric scissors perform the opening and closing operation when the sensor detects the manipulation of the first manipulating section in the predetermined direction from the initial position. The electric scissors perform the auxiliary operation when the sensor detects the manipulation of the second manipulating section in the direction different from the predetermined direction from the initial position.
(7) In the electric scissors according to any one of (1) to (6), the auxiliary operation is an operation of changing an operating mode of the electric scissors.
(8) In the electric scissors according to any one of (1) to (6), the auxiliary operation is an operation of changing a maximum opening angle of the blade section.

According to the invention of (1), when the manipulating member is manipulated in a predetermined direction, the opening and closing operation is performed, and when the manipulating member is manipulated in a direction different from the predetermined direction, an auxiliary operation different from the opening and closing operation is performed. That is, the invention is configured to perform one of the opening and closing operation of the blade section or the auxiliary operation by manipulating the manipulating member in any direction. According to such a configuration, it is possible to perform the auxiliary operation in a simple operation such as only manipulating the manipulating member once. Moreover, since the manipulating section that is an essential structure of the conventional electric scissors is used, there is no need to provide another manipulating section to perform the auxiliary operation, and the conventional structure and the number of components are hardly affected. Therefore, there is no problem in which the structure of the manipulating member becomes complicated or the manufacturing cost also increases.

According to the invention of (2), the manipulating member is provided so that the second manipulating section is not relatively moved with respect to the first manipulating section. According to such a configuration, it is possible to reliably perform the opening and closing operation and the auxiliary operation.

According to the invention of (3), when the manipulating member is pulled to come close to the grip, the opening and closing operation of the blade section is performed, and when the manipulating member is pressed away from the grip, the auxiliary operation is performed. According to such a configuration, it is possible to perform the auxiliary operation in a simple operation such as only manipulating the manipulating member once.

According to the invention of (4), when the first manipulating section is pulled, the manipulating member is rotated to come closer to the grip, and when the second manipulating section is pressed, the manipulating member is rotated away from the grip. According to such a configuration, it is possible to dispose the first manipulating section and the second manipulating section in the scissors main body by a simple structure.

According to the invention of (5), when the first manipulating section is pulled, the manipulating member is linearly moved to come close to the grip, and the second manipulating section is pressed, the manipulating member is linearly moved away from the grip. According to such a configuration, it is possible to dispose the first manipulating section and the second manipulating section in the scissors main body by a simple structure.

According to the invention of (6), the electric scissors include a sensor that detects manipulation of the manipulating member in a predetermined direction from the initial position, and manipulation of the manipulating member in a direction different from the predetermined direction from the initial position. That is, even when manipulating the manipulating member in both directions, it is possible to detect the manipulation by the same sensor. According to such a configuration, since it is not necessary to add a sensor for detecting the manipulation related to the auxiliary operation, it is possible to provide an inexpensive manipulating section for the auxiliary operation in a simple structure.

According to the invention of (7), the auxiliary operation is an operation of changing the operating mode of the electric scissors. According to such a configuration, it is possible to easily change the operating mode of the electric scissors as long as the manipulating member is manipulated only once.

According to the invention of (8), the auxiliary operation is an operation of changing the maximum opening angle of the two blade sections. According to such a configuration, since it is possible to easily adjust the opening angle of the blade only by manipulating the manipulating member once, it is possible to quickly change the opening angle of the blade section, for example, depending on the thickness of the branches to be cut. Specifically, when cutting thick branches, the thick branches can be cut at a time by setting a large opening angle of the blade section, and when cutting the thin branches, the thin branches can be quickly and efficiently cut by setting a small opening angle of the blade section.

### BRIEF DESCRIPTION OF THE DRAWINGS

Fig. 1 is a right side view of electric scissors;
Fig. 2 is a right side view illustrating an internal structure of the electric scissors;
Fig. 3 is a left side view illustrating the internal structure of the electric scissors;
Figs. 4A and 4B are explanatory views illustrating a cutting operation, Fig. 4A is a diagram of an open state of a blade section, and Fig. 4B is a diagram of a closed state of the blade section;
Figs. 5A, 5B and 5C are explanatory views illustrating the movement of a manipulating member, Fig. 5A is a diagram of a state of not manipulating the manipulating member, Fig. 5B is a diagram of a state of manipulating a first manipulating section, and Fig. 5C is a diagram of a state of manipulating a second manipulating section; and
Figs. 6A and 6B are explanatory views illustrating an opening angle of the blade section, Fig. 6A is a diagram of a state of setting a large opening angle of the blade section, and Fig. 6B is a diagram of a state of setting a small opening angle of the blade section.

### DETAILED DESCRIPTION

Embodiments of the invention will be described with reference to drawings.

Electric scissors 10 according to the present embodiment is, for example, used in pruning of trees or the like to cut the cutting object, such as the branches by opening and closing a pair of blade sections 18 and 19 by the driving force of a motor 12 as a power source.

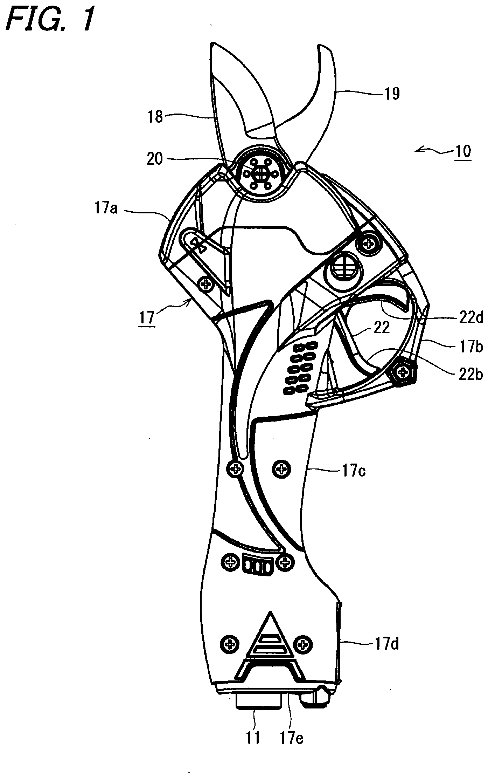

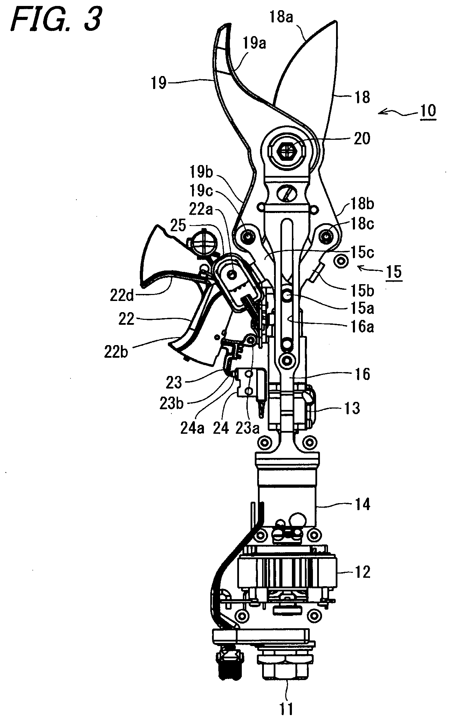

As illustrated in Figs. 1 to 3, the electric scissors 10 is equipped with a housing 17, a cable connector 11 provided at the rear end of the housing 17, a motor 12, a ball screw mechanism 13 for converting the rotary operation of the motor 12 into a rectilinear operation, a support member 16 for guiding the rectilinear movement of the ball screw mechanism 13, a link mechanism 15 for converting the rectilinear movement of the ball screw mechanism 13 into the opening and closing operation of two blade sections 18 and 19, the first blade section 18 and the second blade section 19 actuated by the link mechanism 15, a manipulating member 22 provided as a manipulating section for controlling the motor 12, a oscillating member 23 that oscillates to follow the manipulating member 22, a micro-switch 24 in which a contact point is pressed by the oscillating member 23, and a sensor 25 for detecting a rotation angle of the manipulating member 22.

Although it is not particularly illustrated, the housing 17 is made up of two divided pieces, and houses the operating mechanism therein to cover substantially the whole machine. The housing 17 includes a link cover 17a as a portion that covers the link mechanism 15, a manipulating member guard 17b formed in a hoop shape to cover the periphery of the manipulating member 22, a grip 17c formed to be gripped by a user, and a rear end 17d provided in the rear portion of the grip 17c.

The link cover 17a is provided at the front end of the housing 17 to house the link mechanism 15, and the first blade section 18 and the second blade section 19 protrude from the front end.

The manipulating member guard 17b is provided at the rear lower side of the link cover 17a, and is provided at a boundary between the link cover 17a and the grip 17c. The manipulating member guard 17b is formed in a hoop shape, and is disposed to be able to hook the index finger into the hoop-shaped manipulating member guard 17b when the user grasps the grip 17c. The manipulating member 22 is exposed to be manipulated inside the manipulating member guard 17b. Although the details will be described later, the first manipulating section 22b (trigger) of the manipulating member 22 is exposed to the front (the grip 17c side) to be manipulated, and the second manipulating section 22d of the manipulating member 22 is exposed to the front (the link cover 17a side) to be manipulated.

The grip 17c is thinner than the link cover 17a, is formed to be slightly thinner than the rear end 17d, and has a shape that is easily grasped by the user. A ball screw mechanism 13 is built in the grip 17c.

The rear end 17d provided at the rear end of the housing 17 houses the motor 12 or the like, and a cable connector 11 is provided on a rear end surface 17e.

The cable connector 11 is a part for connecting a cable (not illustrated), and includes a terminal for connecting the power lines and signal lines. The cable connected to the cable connecting unit 11 is connected to a power source device (not illustrated). A power switch is provided in the power source device or the cable, and by turning on the power switch, the power is supplied to the electric scissors 10 from the power source via the cable.

The motor 12 is a power source that operates to close the first blade section 18 and the second blade section 19, and is actuated by the power supplied from the power source device. An output shaft of the motor 12 is connected to the ball screw mechanism 13 to be described later. A speed reduction mechanism 14 may be provided between the output shaft of the motor 12 and the ball screw mechanism 13, and may directly connect the output shaft of the motor 12 and the ball screw mechanism 13.

The ball screw mechanism 13 converts the rotary operation of the motor 12 into the linear operation. Although it is not particularly illustrated, the ball screw mechanism 13 includes a screw shaft that rotates by receiving the rotational force of the motor 12, and a nut that meshes with the screw groove of the screw shaft. Thus, when the screw shaft is rotated to drive by the driving force of the motor 12, the nut is formed to linearly move along the screw shaft. A drive shaft 15a of the link mechanism 15 to be described later is connected to the nut, and the drive shaft 15a is formed to linearly move back and forth integrally with the nut.

The support member 16 is to guide the rectilinear movement of the ball screw mechanism 13. A guide groove 16a extending in the guide direction is provided in the support member 16, and the drive shaft 15a of the link mechanism 15 is engaged with the guide groove 16a. Therefore, the nut and the drive shaft 15a are adapted to move along the extending direction of the guide groove 16a.

The link mechanism 15 converts the rectilinear movement of the drive shaft 15a into the opening and closing operation of the first blade section 18 and the second blade section 19. The link mechanism 15 includes a first link 15b and a second link 15c which are pivotally connected by the drive shaft 15a. The first link 15b has one end connected to the drive shaft 15a, and the other end connected to the first blade section 18 via the connecting shaft 18c. The second link 15c has one end connected to the drive shaft 15a, and the other end connected to the second blade section 19 via the connecting shaft 19c.

The first blade section 18 and the second blade section 19 are pivotally supported around a blade shaft 20, and are combined so as to intersect with each other in the blade shaft 20. A blade is formed in a cutting portion 18a of a tip side of the first blade section 18 than the blade shaft 20, and a base portion 18b of the base side than the blade shaft 20 is pivotally connected to the first link 15b via a connecting shaft 18c. Similarly, a blade is formed in a cutting portion 19a of the tip side of the second blade section 19 than the blade shaft 20, and a base portion 19b of the base side than the blade shaft 20 is pivotally connected to the second link 15c via the connecting shaft 19c.

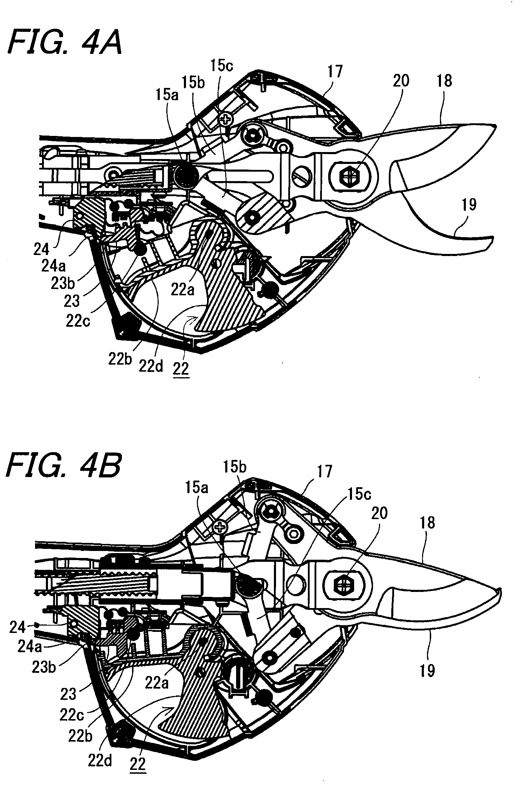

As illustrated in Figs. 4A and 4B, the aforementioned link mechanism 15, the first blade section 18 and the second blade section 19 are actuated by the rectilinear movement of the ball screw mechanism 13.

More specifically, when the drive shaft 15a moves in the direction of coming close to the blade shaft 20, the first link 15b and the second link 15c are actuated in the opening direction. Thus, the base portions 18b and 19b of the first blade section 18 and the second blade section 19 are displaced in a direction away from each other, the cutting portions 18a and 19a of the first blade section 18 and the second blade section 19 mutually rotate in the closing direction to perform the cutting operation.

Meanwhile, when the drive shaft 15a moves in a direction away from the blade shaft 20, the first link 15b and the second link 15c are actuated in the closing direction. Accordingly, the base portions 18b and 19b of the first blade section 18 and the second blade section 19 are displaced in the direction of coming close to each other, and the cutting portions 18a and 19a of the first blade section 18 and the second blade section 19 mutually rotate in the opening direction.

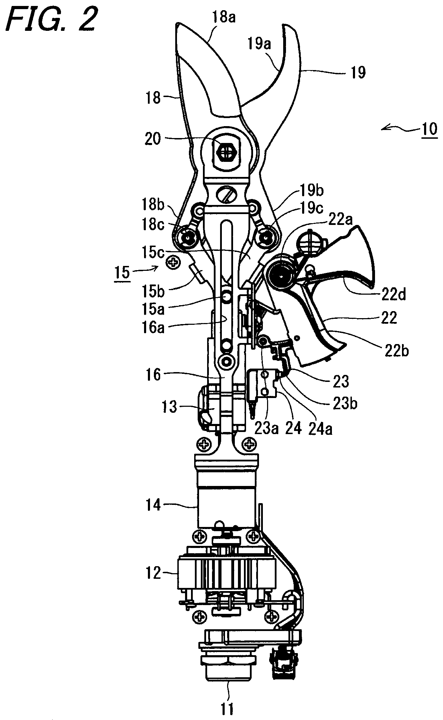

The manipulating member 22 is a manipulating section for controlling the actuation of the motor 12, and performs the cutting operation of the first blade section 18 and the second blade section 19 by controlling the operation of the motor 12. The manipulating member 22 is pivotally mounted around a shaft 22a. The manipulating member 22 according to the present embodiment has a substantially L-shape in the side view as illustrated in Fig. 2 or the like, and includes the first manipulating section 22b and the second manipulating section 22d extending in the respective different directions from the position where the shaft 22a is provided.

The first manipulating section 22b is a manipulating section for controlling the operation of the motor 12, and performs (control) the opening and closing (cut) operations of the first blade section 18 and the second blade section 19 by controlling the operation of the motor 12. The second manipulating section 22d performs an auxiliary operation.

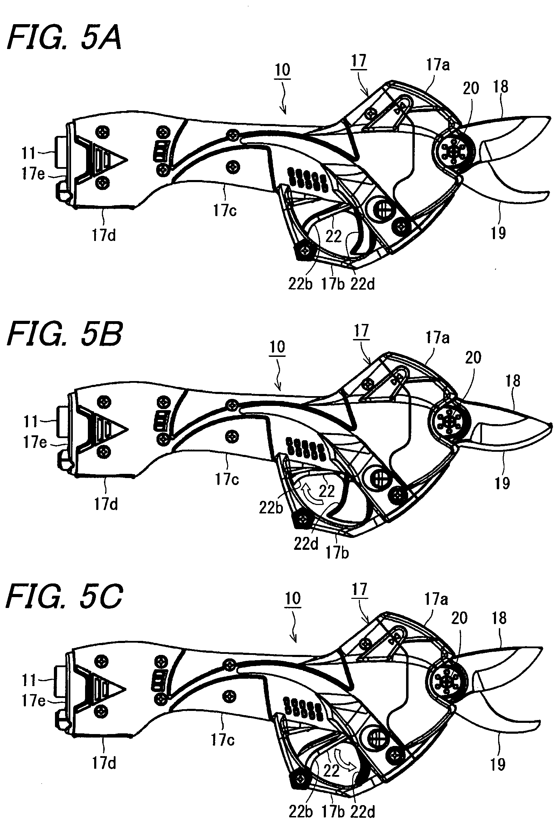

The first manipulating section 22b and the second manipulating section 22d are disposed to face each other, and are exposed to the inside of the manipulating member guard 17b to be manipulated. Thus, when a finger is inserted between the first manipulating section 22b and the second manipulating section 22d and the finger is moved backward (the grip 17c side) with respect to the shaft 22a as illustrated in Fig. 5B, the first manipulating section 22b can be manipulated. Also, when the finger is moved forward (the link cover 17a side) with respect to the shaft 22a as illustrated in Fig. 5C, the second manipulating section 22d can be manipulated. When the first manipulating section 22b or the second manipulating section 22d is manipulated, the manipulating member 22 rotates around the shaft 22a. Thus, when the first manipulating section 22b is pulled to come close to the grip 17c side, the electric scissors 10 perform the opening and closing operation of the first blade section 18 and the second blade section 19, and when the second manipulating section 22d is pushed away from the grip 17c side, the electric scissors 10 perform the auxiliary operation.

The first manipulating section 22b and the second manipulating section 22d are disposed to be relatively immovable with each other. When the first manipulating section 22b is manipulated, the second manipulating section 22d also moves in the same direction as the first manipulating section 22b in conjunction with this manipulation. When the second manipulation section 22d is manipulated, the first manipulation section 22b also moves in the same direction as the second manipulation section 22d in conjunction with the manipulation. Therefore, when manipulating the first manipulating section 22b and when manipulating the second manipulating section 22d, the manipulating member 22 is rotated in the different directions.

A roller 22c as illustrated in Figs. 4A and 4B is provided inside the first manipulating section 22b. The roller 22c is used to push an oscillating member 23 to be described later.

The oscillating member 23 is a member that oscillates to follow the rotation of the manipulating member 22 when the first manipulating section 22b of the manipulating member 22 is manipulated. The oscillating member 23 is allowed to oscillate around the oscillating shaft 23a, and is adapted to oscillate by the roller 22c when the manipulating member 22 is rotated. The oscillating member 23 is provided with a pressing portion 23b to face a contact point 24a of a micro switch 24 to be described later, and when oscillated by the roller 22c, the pressing portion 23b pushes the contact point 24a of the micro switch 24.

The micro switch 24 is to detect that the first manipulating section 22b of the manipulating member 22 is manipulated. As described above, when the first manipulating section 22b of the manipulating member 22 is manipulated, since the oscillating member 23 is configured to turn on the micro switch 24, by detecting the turning on-off of the micro switch 24, it is possible to determine whether the first manipulating section 22b of the manipulating member 22 is manipulated.

The sensor 25 is to detect the rotational angle of the manipulating member 22. As the sensor 25, as long as it is possible to detect the manipulation of the manipulating member 22, anything may be used. However, for example, it is possible to use a potentiometer that is connected to the shaft 22a. When using the potentiometer, it is possible to specifically grasp the manipulation amount of the manipulating member 22.

The operation of the electric scissors 10 is controlled by a control device (not illustrated) that is built in the electric scissors 10 or the power source device. When the first manipulating section 22b of the manipulating member 22 is manipulated, and turning-on of the micro switch 24 is detected, the control device detects the rotational angle of the manipulating member 22 by the sensor 25. Further, the motor 12 is rotated in a normal direction in accordance with the detected angle to operate the two blade sections 18 and 19 in the closing direction. When the first manipulating section 22b of the manipulating member 22 is fully manipulated, the two blade sections 18 and 19 enter a fully closed state. When the first manipulating section 22b is released, the manipulating member 22 is returned to the initial position by a spring (not illustrated). When the sensor 25 detects that the manipulating member 22 is returned to the initial position, the sensor 25 sends a control signal to the control device. The control device which has received the control signal actuates the two blade sections 18 and 19 until the maximum opening angle, by rotating the motor 12 in the reverse direction. Thus, the two blade sections 18 and 19 are returned to the initial position. At the same time, since the manipulating member 22 is returned to the initial position and the micro switch 24 is turned off, the stop of the two blade sections 18 and 19 is maintained at the maximum opening angle.

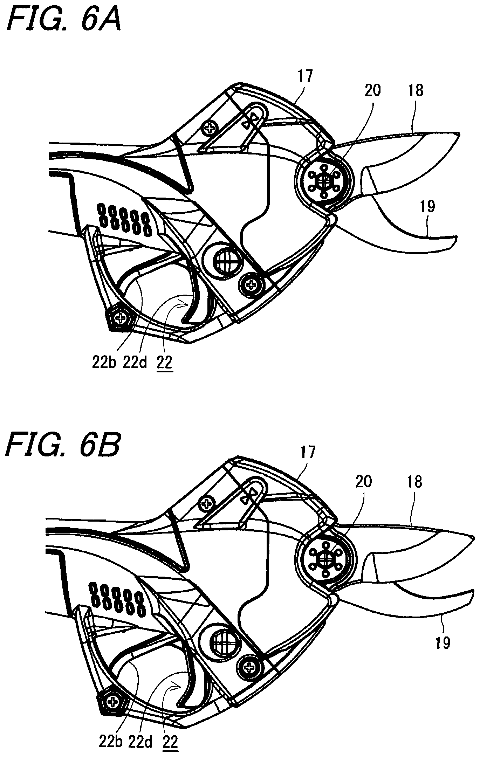

Incidentally, the electric scissors 10 according to this embodiment is capable of executing the operation of changing the operating mode of the electric scissors 10 as an auxiliary operation. As the operating mode, as illustrated in Fig. 6A, the two modes of a thick branch mode in which the maximum opening angle of the two blade sections 18 and 19 increases, and a thin branch mode in which the maximum opening angle of the two blade sections 18 and 19 decreases are included, and by switching the two modes, it is possible to change the maximum opening angle of the two blade sections 18 and 19.

When switching the aforementioned modes, the manipulation is performed in a different direction from the time when performing the cutting operation of the manipulating member 22. That is, the second manipulating section 22d of the manipulating member 22 is manipulated. When the second manipulating section 22d of the manipulating member 22 is manipulated, this manipulation is detected by the sensor 25. When the sensor 25 detects that the second manipulating section 22d is manipulated, the sensor 25 sends a control signal to the control device. The control device which has received the control signal performs the auxiliary operation. In the present embodiment, as an auxiliary operation, the operating mode of the electric scissors 10 is changed, and the maximum opening angle of the two blade sections 18 and 19 is changed. Specifically, the thick branch mode is shifted to the thin branch mode, and the thin branch mode is shifted to the thick branch mode.

When moving the blade sections 18 and 19 at the time of changing the operating mode, since there is no cutting operation but there is a risk of movement of the blade sections 18 and 19, in this embodiment, the blade sections 18 and 19 are not moved at the time of operating mode change. In the initial cutting operation after the change of the operating mode, the maximum opening angle is changed. More specifically, when the first manipulating section 22b manipulated in the cutting operation is released, the two blade sections 18 and 19 are returned to the initial position, but are stopped at the maximum opening angle corresponding to the new mode at this time.

The operating mode is adapted to be restored even after the power source of the electric scissors 10 is turned off. That is, when the power source of the electric scissors 10 is turned off in the state of the thin branch mode, at the time of the next power turning-on, the electric scissors 10 is started-up in the state of thin branch mode. Also, when turning off the power source of the electric scissors 10 in the state of thick branch mode, the electric scissors 10 is started-up in the state of thick branch mode at the time of the next power turning-on.

As described above, according to the present embodiment, when the manipulating member 22 is manipulated in a predetermined direction from the initial position, the cutting operation is performed, and when the manipulating member 22 is manipulated in a direction different from the predetermined direction from the initial position, the auxiliary operation different from the cutting operation is performed. That is, the electric scissors 10 is configured to perform one of the opening and closing operation of the blade sections 18 and 19 or the auxiliary operation, by manipulating the manipulating member 22 in both directions. According to such a configuration, it is possible to perform the auxiliary operation by a simple operation only by manipulating the manipulating member 22 once. Moreover, since the manipulating member 22 that is an essential structure in the conventional electric scissors 10 is used, there is no need to provide another manipulating section in order to perform the auxiliary operation, and the conventional structure and the component number are hardly affected. Accordingly, there is no problem in which the structure manipulating member 22 becomes complicated or the manufacturing costs increase.

The electric scissors 10 is equipped with the sensor 25 for detecting that the manipulating member 22 is manipulated in a predetermined direction from the initial position, and the manipulating member 22 is manipulated in a direction different from the predetermined direction from the initial position. That is, even when manipulating the manipulating member 22 in both directions, it is possible to detect the manipulation by the same sensor 25. According to this structure, since it is not necessary to add a sensor for detecting the manipulation related to the auxiliary operation, it is possible to provide a manipulating section for inexpensive auxiliary operating by a simple structure.

Further, the auxiliary operation is an operation of changing the operating mode of the electric scissors 10. According to such a configuration, it is possible to easily change the operating mode of the electric scissors 10 only by manipulating the manipulating member 22 once.

Further, the auxiliary operation is an operation of changing the maximum opening angle of the two blade sections 18 and 19. According to this configuration, since it is possible to easily adjust the opening angle of the blade sections 18 and 19 only by manipulating the manipulating member 22 once, for example, it is possible to quickly change the opening angle of the blade sections 18 and 19 depending on the thickness of the branches to be cut. Specifically, when cutting the thick branches, the cutting can be performed at a time by setting the large opening angle of the blade sections 18 and 19, and when cutting the thin branches, the cutting can be quickly and efficiently performed by setting the smaller opening angle of the blade sections 18 and 19.

As the auxiliary operation in the above-described embodiment, the operations of changing the operating mode of the electric scissors 10 and changing the maximum opening angle of the two blade sections 18 and 19 were performed. However, the embodiment of the invention is not limited thereto, and another operation as an auxiliary operation may be performed.

For example, an operation for changing the closing angle of the two blade sections 18 and 19 may be performed as the auxiliary operation. If such an auxiliary operation is performed, the shape of the blade section 18 and 19 is changed by reasons such as excessive sharpening of the blade sections 18 and 19. Thus, even when the blade sections 18 and 19 are not completely closed, it is possible to close the blade sections 18 and 19 by deepening the closing angle of the blade sections 18 and 19.

The operation of changing the speed at which the two blade sections 18 and 19 are closed may be performed as the auxiliary operation. If such an auxiliary operation is performed, the operation can be performed at any speed.

The operation of changing the reporting method at the time of occurrence of an error may be performed as the auxiliary operation. If such an auxiliary operation is performed, for example, when the periphery is noisy, an error can be reported by beam such as LED, and when the periphery is bright and it is hard to see the beam such as LED, an error can be reported by the sound of a buzzer or the like.

Further, an illumination device is provided in the electric scissors 10, and the operation of switching the turning on-off of the illumination device may be performed as the auxiliary operation. If such an auxiliary operation is performed, it is possible to easily light the illumination at the time of work in a dark location.

When an error occurs, an operation of reporting the type of the error may be performed as the auxiliary operation. That is, in the conventional device, the types of errors have often been displayed on a display unit of a power source device, however, in such a conventional device, it has been necessary to extract the power source device to know the types of errors. However, if such an auxiliary operation is performed, it is possible to know the types of errors even without extracting the power source device. As the operation of reporting the types of errors, for example, different buzzer sounds may be issued for each type of error, and a lamp may be turned on and off or flickered for each type of error in different manners.

In the above-described embodiments, although an example in which the manipulating member 22 rotates has been described, but is not limited to this, and the manipulating member 22 may perform a rectilinear movement. In this case, as the sensor 25, a sensor for detecting a movement amount of the rectilinear movement may be used. Even when configured in this manner, by moving the manipulating member 22 forward or backward, it is possible to switch whether to perform the opening and closing operation of the blade sections 18 and 19 or the auxiliary operation. Even when manipulated in either direction, it is possible to detect the manipulation by the same sensor 25.

In the above-described embodiment, the operation of switching whether to perform the opening and closing operation and the auxiliary operation is performed based on the initial position of the manipulating member 22. That is, when the manipulating member 22 is manipulated from the initial position in a predetermined direction, the opening and closing operation of the blade sections 18 and 19 is performed, and when the manipulating member 22 is manipulated in a direction different from the predetermined direction from the initial position, the auxiliary operation is performed. However, an operation of switching whether to perform the cutting operation or the auxiliary operation may be performed based on the present position of the manipulating member 22, without being limited thereto. That is, when the manipulating member 22 is manipulated in a predetermined direction from the current position, the opening and closing operations of the blade sections 18 and 19 may be performed, and when the manipulating member 22 is manipulated in a direction different from the predetermined direction from the current position, the auxiliary operation may be performed.

In the above-described embodiment, although the first manipulating section 22b and the second manipulating section 22d are integrally formed, these portions may be constituted by separate components. At that time, for example, these portions may be constituted to be movable at a relative position so that it is possible to adjust the interval between the first manipulating section 22b and the second manipulating section 22d in accordance with the user.

In the electric scissors 10 according to the above-described embodiment, both the two blade sections 18 and 19 are a double-edged movable type, but is not limited thereto, the invention can also be similarly applied to a single-edged movable electric scissors 10 in which one blade section is fixed and the other blade section is movable.

## Claims

1. Electric scissors comprising:
a pair of blade sections (18, 19) capable of being opened and closed; and
a manipulating member (22) **characterized in that** the manipulation member (22) has a first manipulating section (22b) and a second manipulating section (22d) which are provided to face each other,
wherein the first manipulating section (22b) performs opening and closing operation of the blade section (18, 19), and
the second manipulating section (22d) performs an auxiliary operation which is different from the opening and closing operation,
when the first manipulating section (22b) is manipulated in a predetermined direction, the opening and closing operation is performed, and
when the second manipulating section (22d) is manipulated in a direction different from the predetermined direction, the auxiliary operation is performed.

2. The electric scissors according to claim 1,
wherein the second manipulating section is provided so as not to relatively move with respect to the first manipulating section.

3. The electric scissors according to claim 1 or 2, further comprising:
a grip that is provided on an opposite side of the blade section with respect to the manipulating member such that the manipulating member is interposed between the grip and the blade section,
wherein, when the first manipulating section is pulled to come close to the grip, the opening and closing operation is performed, and
when the second manipulating section is pushed away from the grip, the auxiliary operation is performed.

4. The electric scissors according to claim 3,
wherein the manipulating member rotates to come close to the grip when the first manipulating section is pulled, and
the manipulating member rotates away from the grip when the second manipulating section is pressed.

5. The electric scissors according to claim 3,
wherein the manipulating member linearly moves to come close to the grip when the first manipulating section is pulled, and
the manipulating member linearly moves away from the grip when the second manipulating section is pressed.

6. The electric scissors according to any one of claims 1 to 5, further comprising:
a sensor that detects manipulation of the first manipulating section in the predetermined direction from an initial position, and that detects manipulation of the second manipulating section in the direction different from the predetermined direction from the initial position,
wherein the electric scissors perform the opening and closing operation when the sensor detects the manipulation of the first manipulating section in the predetermined direction from the initial position, and
the electric scissors perform the auxiliary operation when the sensor detects the manipulation of the second manipulating section in the direction different from the predetermined direction from the initial position.

7. The electric scissors according to any one of claims 1 to 6,
wherein the auxiliary operation is an operation of changing an operating mode of the electric scissors.

8. The electric scissors according to any one of claims 1 to 6,
wherein the auxiliary operation is an operation of changing a maximum opening angle of the blade section.

## Patentansprüche

1. Elektrische Schere umfassend:
ein Paar Klingenabschnitte (18, 19), die ausgelegt sind, um geöffnet und geschlossen zu werden; und
ein Handhabungselement (22), **dadurch gekennzeichnet, dass**
das Handhabungselement (22) einen ersten Handhabungsabschnitt (22b) und einen zweiten Handhabungsabschnitt (22d) umfasst, die vorgesehen sind, um einander gegeneinander gegenüber zu liegen, wobei der erste Handhabungsabschnitt (22b) ein Öffnungs- und Schließvorgang des Klingenabschnitts (18, 19) durchführt, und der zweite Handhabungsabschnitt (22d) einen Hilfsvorgang durchführt, der unterschiedlich zu dem Öffnungs- und Schließvorgang ist,
wenn der erste Handhabungsabschnitt (22b) in eine vorbestimmte Richtung betätigt wird, der Öffnungs- und Schließvorgang durchgeführt wird, und wenn der zweite Handhabungsabschnitt (22d) in eine zur vorbestimmten Richtung unterschiedliche Richtung betätigt wird, der Hilfsvorgang durchgeführt wird.

2. Elektrische Schere gemäß Anspruch 1,
wobei der zweite Handhabungsabschnitt derart vorgesehen ist, dass er sich nicht relativ bezüglich des ersten Handhabungsabschnitts bewegt.

3. Elektrische Schere gemäß Anspruch 1 oder 2 weiter umfassend:
einen Griff, der an einer gegenüberliegenden Seite zu dem Klingenabschnitt bezüglich des Handhabungselements vorgesehen ist, so dass das Handhabungselement zwischen dem Griff und dem Klingenabschnitt angeordnet ist,
wobei, wenn der erste Handhabungsabschnitt gezogen wird, um nahe zu dem Griff zu kommen, ein Öffnungs- und Schließvorgang durchgeführt wird, und
wenn der zweite Handhabungsabschnitt von dem Griff weggedrängt wird, der Hilfsvorgang durchgeführt wird.

4. Elektrische Schere gemäß Anspruch 3,
bei der sich das Handhabungselement dreht, um nahe zu dem Griff zu kommen, wenn der erste Handhabungsabschnitt gezogen wird, und
das Handhabungselement sich von dem Griff wegdreht, wenn der zweite Handhabungsabschnitt beaufschlagt wird.

5. Elektrische Schere gemäß Anspruch 3,
bei der sich das Handhabungselement linear bewegt, um nahe zu dem Griff zu kommen, wenn der erste Handhabungsabschnitt gezogen wird, und
sich das Handhabungselement linear von dem Griff weg bewegt, wenn der zweite Handhabungsabschnitt beaufschlagt wird.

6. Elektrische Schere gemäß einem der Ansprüche 1 bis 5, weiter umfassend:
einen Sensor, der eine Betätigung des ersten Handhabungsabschnitts in der vorbestimmten Richtung von einer Ausgangsposition erfasst, und der eine Betätigung des zweiten Handhabungsabschnitts in die Richtung unterschiedlich zu der vorbestimmten Richtung von der Ausgangsposition erfasst,
wobei die elektrische Schere den Öffnungs- und Schließvorgang durchführt, wenn der Sensor die Betätigung des ersten Handhabungsabschnitts in die vorbestimmte Richtung von der Ausgangsposition erfasst, und
die elektrische Schere den Hilfsvorgang durchführt, wenn der Sensor die Betätigung des zweiten Handhabungsabschnitts in die Richtung unterschiedlich zu der vorbestimmten Richtung von der Ausgangsposition erfasst.

7. Elektrische Schere gemäß einem der Ansprüche 1 bis 6,
bei der der Hilfsvorgang ein Vorgang eines Wechselns eines Betriebsmodus der elektrischen Schere darstellt.

8. Elektrische Schere gemäß einem der Ansprüche 1 bis 6,
bei der der Hilfsvorgang ein Vorgang eines Änderns eines maximalen Öffnungswinkels des Klingenabschnitts darstellt.

## Revendications

1. Ciseaux électriques comprenant :
une paire de sections de lame (18, 19) aptes à être ouvertes et fermées ; et
un élément de manipulation (22), **caractérisés en ce que** l'élément de manipulation (22) a une première section de manipulation (22b) et une seconde section de manipulation (22d) qui sont prévues de manière à ce qu'elles se fassent face l'une l'autre,
dans lesquels la première section de manipulation (22b) réalise une opération d'ouverture et de fermeture de la section de lame (18, 19) et la seconde section de manipulation (22d) réalise une opération auxiliaire qui est différente de l'opération d'ouverture et de fermeture ; lorsque la première section de manipulation (22b) est manipulée dans une direction prédéterminée, l'opération d'ouverture et de fermeture est réalisée et lorsque la seconde section de manipulation (22d) est manipulée dans une direction différente de la direction prédéterminée, l'opération auxiliaire est réalisée.

2. Ciseaux électriques selon la revendication 1, dans lesquels la seconde section de manipulation est prévue de manière à ce qu'elle ne soit pas déplacée de façon relative par rapport à la première section de manipulation.

3. Ciseaux électriques selon la revendication 1 ou 2, comprenant en outre :
un moyen de préhension qui est prévu sur un côté opposé de la section de lame par rapport à l'élément de manipulation de telle sorte que l'élément de manipulation soit interposé entre le moyen de préhension et la section de lame,
dans lesquels, lorsque la première section de manipulation est rapprochée par traction du moyen de préhension, l'opération d'ouverture et de fermeture est réalisée, et
lorsque la seconde section de manipulation est éloignée par poussée du moyen de préhension, l'opération auxiliaire est réalisée.

4. Ciseaux électriques selon la revendication 3, dans lesquels l'élément de manipulation est rapproché du moyen de préhension par rotation lorsque la première section de manipulation subit une traction, et
l'élément de manipulation est éloigné du moyen de préhension par rotation lorsque la seconde section de manipulation subit une pression.

5. Ciseaux électriques selon la revendication 3, dans lesquels l'élément de manipulation est rapproché du moyen de préhension par déplacement linéaire lorsque la première section de manipulation subit une traction, et
l'élément de manipulation est éloigné du moyen de préhension par déplacement linéaire lorsque la seconde section de manipulation subit une pression.

6. Ciseaux électriques selon l'une quelconque des revendications 1 à 5, comprenant en outre :
un capteur qui détecte une manipulation de la première section de manipulation dans une direction prédéterminée par rapport à une position initiale, et qui détecte une manipulation de la seconde section de manipulation dans la direction différente de la direction prédéterminée par rapport à la position initiale,
dans lesquels les ciseaux électriques réalisent l'opération d'ouverture et de fermeture lorsque le capteur détecte la manipulation de la première section de manipulation dans la direction prédéterminée par rapport à la position initiale, et
les ciseaux électriques réalisent l'opération auxiliaire lorsque le capteur détecte la manipulation de la seconde section de manipulation dans la direction différente de la direction prédéterminée par rapport à la position initiale.

7. Ciseaux électriques selon l'une quelconque des revendications 1 à 6, dans lesquels l'opération auxiliaire est une opération de changement de mode de fonctionnement des ciseaux électriques.

8. Ciseaux électriques selon l'une quelconque des revendications 1 à 6, dans lesquels l'opération auxiliaire est une opération de changement d'un angle d'ouverture maximum de la section de lame.
